**Europäisches Patentamt**

**European Patent Office**

**Office européen des brevets**

(19)

(11) Numéro de publication: **0 165 882**
**B1**

---

# FASCICULE DE BREVET EUROPEEN

(12)

(45) Date de publication du fascicule du brevet:
**07.01.88**

(51) Int. Cl.⁴: **C 04 B 41/87**, B 32 B 18/00

(21) Numéro de dépôt: **85420084.7**

(22) Date de dépôt: **09.05.85**

(54) **Procédé de fabrication d'un matériau composite céramique ayant une ame en fibres céramiques revêtue d'une couche de céramique.**

(30) Priorité: **18.05.84 FR 8407987**

(43) Date de publication de la demande:
**27.12.85 Bulletin 85/52**

(45) Mention de la délivrance du brevet:
**07.01.88 Bulletin 88/1**

(84) Etats contractants désignés:
**AT BE CH DE FR GB IT LI LU NL SE**

(56) Documents cités:
**DE - A - 2 900 225**
**FR - A - 1 054 734**
**US - A - 3 395 068**
**US - A - 4 357 387**

(73) Titulaire: **PRODUITS CELLULOSIQUES ISOLANTES-PROCELIS Société anonyme:, 15 avenue Henri Barbusse, F-38300 Bourgoin Jallieu (FR)**

(72) Inventeur: **Garnier, Albert, La Rollandière Saint Just Chaleyssin, F-38540 Heyrieux (FR)**
Inventeur: **Grandin de L'Eprevier, Alain, F-03350 Le Brethon (FR)**

(74) Mandataire: **Laurent, Michel et al, Cabinet Michel Laurent 20 rue Louis Chirpaz B.P. 32, F-69131 Ecully Cédex (FR)**

## Description

L'invention concerne un procédé pour la fabrication d'un matériau composite céramique ayant une âme ou un substrat en fibres céramiques.

Pour certaines applications de recuit ou de calcinations, ou voire de grillage, notamment en gazetterie, on cherche à réaliser des récipients dans lesquels seront traités des composés chimiques et dont les surfaces, au moins intérieures, soient lisses, étanches aux liquides et inertes chimiquement, de manière à ne pas polluer ces composés, et dont la capacité calorifique soit aussi réduite que possible, afin de ne pas entraîner une consommation inutile d'énergie, notamment lors des traitements discontinus. Malheurususement, à ce jour, on ne sait pas réaliser économiquement de tels récipients.

Dans le document DE-A-2 900 225, on à décrit un matériau poreux en fibres céramiques, liées par des ciments minéraux à base de phosphates et d'oxydes métalliques. L'ensemble est ensuite séché et chauffé à haute température. On obtient ainsi des pièces rigides dont la porosité est d'au moins 60%. Cette technique fort appréciée pour la fabrication de pièces isolantes, ne permet malheureusement pas d'obtenir un état de surface lisse, dense, dure, étanche aux liquides et chimiquement inerte qui sont de plus en plus recherchées.

Dans le document US-A-4 357 387, on a proposé de déposer un matériau céramique sur un tissu par pulvérisation dans un plasma. Cette technique coûteuse, permet de réaliser des revêtements très minces, flexibles, discontinus de matériaux fondus, mais ce revêtement n'est ni rigide, ni étanche.

Dans le document US-A-3 395 068, on a proposé de projeter sur un matériau fibreux en céramique une argile telle qu'une bentonite que l'on sèche ensuite. Ce dépôt de surface, facilite les manutentions de la pièce mais ne donne pas l'état de surface recherché d'autant que si l'on chauffe fortement cette pièce, la couche de surface s'écaille après fissuration et par voie de conséquence s'élimine rapidement.

L'invention pallie ces inconvénients. Elle vise un procédé pour la fabrication d'une pièce composite à base de fibres céramiques, ayant un revêtement rigide, lisse, dur, dense et étanche aux liquides, dans lequel:

. on réalise une pièce de forme voulue en fibres céramiques;

. puis, on revêt l'une au moins des faces de cette pièce, formant substrat ou âme, d'une couche superficielle de matières céramiques;

. ensuite, on sèche la pièce ainsi revêtue, caractérisé:

– en ce que on revêt la pièce sèche en fibres céramiques au moyen d'une engobe de barbotine en suspension aqueuse, dont le coefficient de dilatation, après cuisson, diffère de celui des fibres céramiques de substrat d'au plus un pourcent;

– et en ce que, après séchage, on cuit cette pièce revêtue en surface à une température au moins suffisante pour provoquer la céramisation de ladite engobe séchée.

Dans la suite du texte, l'expression «compatible» signifie que les coefficients de dilatation thermique des fibres céramiques et de l'engobe sont suffisamment proches les uns des autres pour ne pas provoquer de fissuration, de tressaillage ou en général l'apparition de défauts à l'interface des matériaux ou dans l'un d'entre eux lors des variations de température ou des chocs thermiques. En pratique, un écart entre les coefficients de dilatation de chacun de ces composés de l'ordre de un pour cent est acceptable pour la plupart des applications.

Avantageusement, l'épaisseur de l'engobe céramique est comprise entre 0,1 et 1 millimètre.

Avantageusement, en pratique cette cuisson est effectuée à une température supérieure à la température d'utilisation de la pièce composite finie.

Comme on le sait:

– une «barbotine» est une suspension aqueuse d'une pâte de céramique;

– l'«engobage» est une opération qui consiste à recouvrir en partie ou en totalité une pièce céramique d'une légère couche de matières terreuses ou céramiques;

– l'«engobe» est la couche superficielle résultant de l'engobage;

– la «céramisation» est l'opération qui consiste à provoquer l'apparition de liaisons céramiques au sein d'un matériau.

Les matériaux composites fabriqués selon l'invention peuvent présenter des formes les plus variées. Le choix des fibres céramiques constituant la pièce de base, donc l'âme du matériau composite, varie en fonction des spécifications techniques recherchées, notamment en fonction du coût et de la température d'utilisation du produit fini. Ces fibres céramiques peuvent être de même nature ou mélangées entre elles, dans la mesure où le coefficient de dilatation de l'ensemble reste compatible avec la suite du processus de fabrication.

La pièce de base en fibres céramiques peut être élaborée par toutes techniques connues et appropriées. On peut citer par exemple l'aspiration sur moule perforé, la formation par un empilement de nappes en fibres résistant à haute température, ou même les techniques décrites dans la demande de brevet français déposée par la Demanderesse le 13 décembre 1983 sous le n° 83/20 158 (document FR-A-2 556 337, publié le 14.6.85) intitulée «Procédé pour la fabrication d'une pièce fibreuse isolante et pièce ainsi obtenue».

Pour certaines applications, les fibres céramiques peuvent être liées entre elles par un liant minéral usuel comme indiqué dans le préambule. La densité et l'épaisseur de la pièce fibreuse formant âme ou substrat varient en fonction des résultats recherchés.

Comme déja dit, il importe que le coefficient de dilatation de ces fibres céramiques soit compatible avec celui de l'engobe, c'est-à-dire soit sensiblement voisin, de manière à réaliser un bon accrochage à l'interface entre l'engobe et les fibres et à ne pas provoquer une délimitation, une fissuration ou un tressaillage sous l'effet des contraintes de température ou de temps.

Comme «engobe», on peut utiliser des barbotines connues en céramique. Ces barbotines peuvent éventuellement être additionnées de minéraux appropriés. Le choix de cette barbotine tient compte essentiellement des propriétés finales recherchées. En pratique, on dépose l'engobe sur une pièce sèche par des techniques connues telles que trempage, peinture, pulvérisation, etc...

Le sèchage est effectué de manière connue pour éliminer l'eau de la barbotine, notamment à l'étuve électrique.

La température minimum de cuisson est déterminée par la température de céramisation de l'engobe. Habituellement, on cuit à une température supérieure à la température de céramisation de cette engobe et à la température d'utilisation de la pièce finie de manière à ce que cette pièce soit parfaitement stable en cours d'usage.

Après cuisson, la face traitée devient dure, dense, lisse et étanche aux liquides. Elle épouse parfaitement le contour de la pièce de base formant âme ou substrat. Cette surface dense et dure ne se réduit pas en poussière sous l'effet de frottements. Elle est d'autant plus lisse que l'engobe a été plus vitrifiée. Cette couche de surface est stable à la température d'utilisation et inerte vis-à-vis des matériaux destinés à venir en contact avec elle lors de l'utilisation. Cette surface est également étanche aux liquides et même à la plupart des gaz. Enfin, le matériau fini est insensible aux chocs thermiques.

La manière dont l'invention peut être réalisée et les avantages qui en découlent ressortiront mieux des exemples de réalisation qui suivent, donnés à titre indicatif et non limitatif, à l'appui des figures annexées.

La figure 1 est une représentation symbolique en perspective éclatée d'un produit conforme à l'invention.

La figure 2 est une représentation symbolique du processus de fabrication conforme à l'invention.

*Exemple 1*

D'une manière connue, on réalise une plaque ayant des dimensions de 300×200×10 mm en fibres céramiques résistant à une température de 1400°C.

Cette plaque 1 présente une densité voisine de 0,3. Cela est suffisant pour lui donner une bonne rigidité et une tenue mécanique correcte pour la suite des opérations.

On trempe ensuite cette plaque 1 dans une barbotine du commerce formée par une suspension aqueuse d'un mélange de matériaux minéraux ayant globalement une composition de cordiérite, dont on a préalablement testé la compatibilité du coefficient de dilatation avec celui des fibres céramiques et de la plaque. On laisse tremper la plaque 1 jusqu'à déposer sur celle-ci en surface une épaisseur voisine de 0,5 mm.

Ensuite, on sèche soit à l'air libre soit dans une étuve électrique 4.

La pièce séchée 5 est ensuite cuite au four tunnel électrique 6 à 1350°C pendant 4 heures environ.

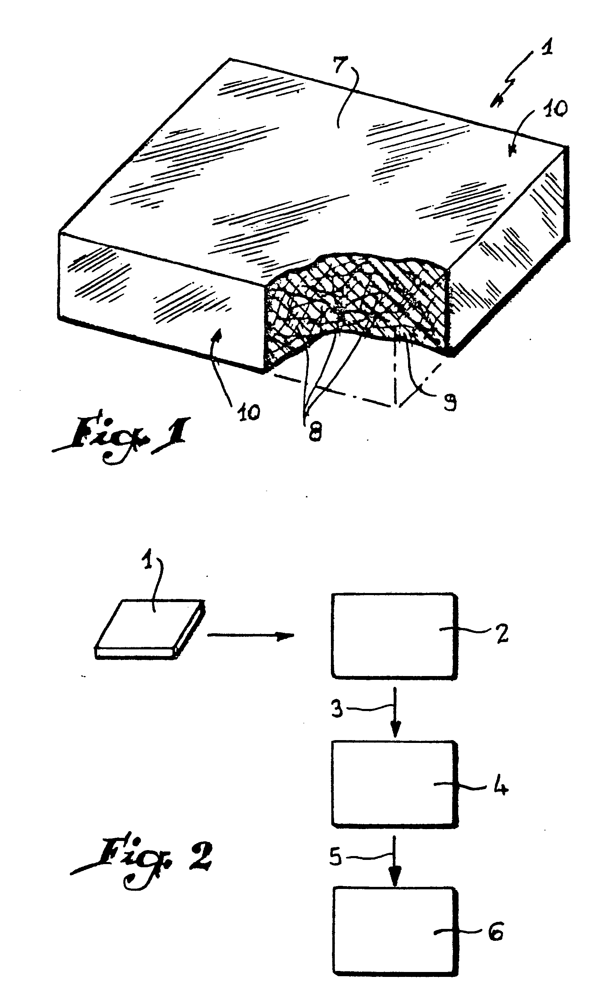

La pièce finie obtenue 7 montrée à la figure 1 est insensible aux chocs thermiques. Elle se compose essentiellement d'une âme 8 formant substrat en fibres céramiques 9, revêtue sur toutes ses faces d'une fine engobe 10 dure, dense, lisse, de céramique, étanche à la plupart des gaz et d'environ 0,4 mm d'épaisseur.

*Exemple 2*

On répète l'exemple précédent en l'appliquant à un substrat en forme de récipient.

Après cuisson, le récipient obtenu comporte sur toutes ses faces une couche dure et dense 10 et peut être utilisé avec succès comme creuset pour la calcination des carbonates ou comme réflecteur dans les installations de séchage infra-rouge dans l'industrie agro-alimentaire.

*Exemple 3*

On répète l'exemple 1 en remplaçant l'opération de trempage dans la barbotine 2 par une opération de pulvérisation. Le dépôt pulvérisé a une épaisseur d'environ 0,5 mm.

Après séchage 4, la plaque 7 ainsi obtenue peut servir de support de cuisson pour les objets céramiques que l'on traite à une température de l'ordre de 1350°C.

*Exemple 4*

On répète l'exemple 1 en remplaçant la plaque 1 par une pièce creuse de forme générale tronconique associée à sa pointe à un cylindre également creux.

On revêt la surface intérieure de cette pièce d'une engobe d'environ 0,8 millimètre d'épaisseur que l'on céramise à 1350°C.

On obtient ainsi un ouvreau de brûleur rigide dont la face intérieure 10 destinée à venir au contact de la flamme des gaz est dure et résiste parfaitement sans érosion à des vitesses de vent élevées.

La technique selon l'invention présente de nombreux avantages. On peut citer:

– la simplicité d'élaboration, sans faire appel à des équipements spéciaux, tels que la projection dans un plasma:

– le fait que les pièces obtenues sont légères, rigides et présentent une faible capacité calorifique, ce qui se traduit par une économie substantielle de la consommation d'énergie dans les procédés de fabrication discontinus;

– le fait d'allier les avantages de la fibre céramique, c'est-à-dire la légèreté, la faible capacité calorifique et la résistance aux chocs thermiques, ainsi que les avantages de la céramique dure et dense, à savoir la dureté, la propreté, l'étanchéité et la bonne résistance aux frottements et à l'abrasion, ainsi qu'une excellente stabilité et inertie chimique en cours d'utilisation.

**Revendications**

1. Procédé pour la fabrication d'une pièce composite à base de fibres céramiques, ayant un revêtement rigide, lisse, dur, dense et étanche aux liquides, dans lequel:
   . on réalise une pièce (1) de forme voulue en fibres céramiques (9),;
   . puis, on revêt l'une au moins des faces de cette pièce (1), formant substrat ou âme, d'une couche superficielle de matières céramiques;
   . ensuite, on sèche (4) la pièce (5) ainsi revêtue (3),
caractérisé:

– en ce que on revêt la pièce (1) sèche en fibres céramiques au moyen d'une engobe (3) de barbotine en suspension aqueuse, dont le coefficient de dilatation, après cuisson, diffère de celui des fibres céramiques (9) de substrat d'au plus un pourcent;

– et en ce que, après séchage, on cuit cette pièce (5) revêtue en surface à une température au moins suffisante pour provoquer la céramisation de ladite engobe (3) séchée.

2. Procédé selon la revendication 1, caractérisé en ce que la cuisson (6) est effectuée à une température également supérieure à la température à laquelle la pièce composite finie est destinée à être utilisée.

## Patentansprüche

1. Verfahren zur Herstellung eines Verbundstückes auf Basis keramischer Fasern, das einen steifen, glatten, kompakten und flüssigkeitsundurchlässigen Überzug aufweist, wobei:
   . ein Stück (1) aus keramischen Fasern (9) in der gewünschten Form hergestellt wird,
   . danach zumindest eine der Flächen des Stückes (1), das ein Substrat oder einen Kern bildet, mit einer oberflächlichen Schicht aus keramischen Materialien überzogen wird;
   . anschliessend das derart beschichtete (3) Stück (5) getrocknet (4) wird,
dadurch gekennzeichnet, dass
   – das trockene Stück (1) aus keramischen Fasern mit zumindest einem Überzug (3) aus Schlicker in wässriger Aufschlämmung belegt wird, dessen Ausdehnungskoeffizient sich nach dem Brennen um höchstens ein Prozent von dem der keramischen Fasern (9) des Substrates unterscheidet;

– und dass nach dem Trocknen das oberflächlich beschichtete Stück (5) bei einer Temperatur gebrannt wird, die zumindest ausreicht, die Keramisierung des trockenen Überzuges (3) hervorzurufen.

2. Verfahren nach Anspruch 1, dadurch gekennzeichnet, dass das Brennen (6) bei einer Temperatur durchgeführt wird, die auch oberhalb derjenigen Temperatur liegt, bei der das fertige Verbundstück zur Verwendung bestimmt ist.

## Claims

1. A method for producing a fibrous ceramic composite material, comprising a rigid, smooth, hard, dense and impervious to liquids coating, wherein:
   . a fibrous ceramic piece (1) of desirated shape is realised,
   . then, at least one face of said piece (1), forming substate or core, is coated with a superficial layer of ceramic material,
   . then, said coated (3) piece (5) is dried (4),
characterized
   – by the fact that said fibrous ceramic dry piece (1) is coated by means of an aqueous suspension of a slip coating (3), having a coefficient of expansion, after baking, which differs from that of said ceramic fibers of the substrate by a maximum of one percent,
   – and by the fact that after drying, said coated piece (5) is baked at a sufficient temperature to result in ceramization of said dried slip coating (3).

2. The method of claim 1, wherein said baking (6) is performed at a temperature higher than the temperature at which the finished composite piece is intended to be used.

Fig. 1

Fig. 2